# EUROPEAN PATENT SPECIFICATION

(11) **EP 3 999 377 B1**
(45) Date of publication and mention of the grant of the patent: **08.02.2023**
(21) Application number: 20742217.1
(22) Date of filing: 14.07.2020
(51) Int. Cl.: B60N 2/75, B60N 2/22, B60N 2/02

(54) **ARMREST ASSEMBLY WITH ARMREST MOVEABLE BETWEEN EGRESS POSITION AND USE POSITION AND VEHICLE SEAT WITH MOVEABLE ARMREST**
ARMLEHNENANORDNUNG MIT ZWISCHEN AUSGANGSSTELLUNG UND GEBRAUCHSPOSITION BEWEGLICHER ARMLEHNE UND FAHRZEUGSITZ MIT BEWEGLICHER ARMLEHNE
ENSEMBLE ACCOUDOIR COMPORTANT UN ACCOUDOIR MOBILE ENTRE UNE POSITION DE SORTIE ET UNE POSITION D'UTILISATION ET SIÈGE DE VÉHICULE À ACCOUDOIR MOBILE

(30) Priority: 15.07.2019 US 201962873984 P
(43) Date of publication of application: 25.05.2022
(73) Proprietor: Adient US LLC, Plymouth, MI 48170 (US)
(72) Inventor: BURTON, Brent D., Windsor, Ontario N8P-1R9 (CA); CARUSS, Nathan A., Ann Arbor, Michigan 48103 (US); KAPUSKY, Michael J., South Lyon, Michigan 48178 (US); MICHALAK, Eric B., Canton, Michigan 48187 (US)
(74) Representative: Liedhegener, Ralf
(86) International application number: PCT/EP2020/069883
(87) International publication number: WO 2021/009169

(56) References cited:
- DE-A1- 10 316 731
- JP-U- H0 518 971
- US-A1- 2013 119 738

## Description

### Field of the invention

The present invention relates to armrest assemblies and vehicle seats in general and more particularly relates to an armrest assembly with an armrest body moveable between an egress position and a use position and to a vehicle seat with such an armrest assembly.

### Background of the invention

Vehicle seats can be provided with a backrest (also known as a seat back) that moves relative to the seat base (also known as the seat cushion). This movement may be between a backrest upright (full up) position and a backrest fully reclined position. The backrest may also be movable between a full forward position and a fully reclined position (a full 180° of movement or more). The backrest may also have a mechanism and features for movement between an upright and a fully reclined position (a reclining feature) and may also have an easy entry feature - which typically combines forward movement of the backrest with forward movement of the seat base. Seats with a vehicle structure (partition) directly behind them do not recline. However, so-called slouch seats may be provided at such locations. A tilting of the backrest (from an upright position to a fully reclined position) may be accomplished with movement of a seat base, such as a forward movement of the seat base. Although such slouch seats may be usefully deployed with a vehicle partition directly behind the seat, slouch seats may be advantageously used even where there is ample space behind the vehicle seat, for the backrest to recline. Such slouch seats (backrest with seat base) may be carried by seat frames that may be moveable forward and backward along rails fixed to the vehicle floor.

Automotive vehicle seats may be provided with an armrest. The armrest may be fixed to the backrest or fixed to the seat base or to the vehicle structure or to some other structural part of the vehicle seat, such as a seat frame. Some armrests for automotive vehicle seats are part of the backrest and may be moved between a stored/full up position, in which the armrest forms a part of the backrest, and a deployed/comfort position. A reclining of the backrest with movement between a full up position and a fully reclined position will change the angle of the arm rest relative to the vehicle floor and relative to the seat base. The documents US 2013/119738 A1, DE 103 16 731 A1 and JP H05 18971 U show examples of armrest assemblies according to the prior art.

### Problem

It is an object of the invention to provide an armrest arrangement connected to the seat base with an armrest support and adjustment arrangement for raising and lowering an armrest body and changing an inclination angle thereof based on an inclination angle of at least the backrest frame.

### Solution

According to the invention, an armrest assembly is provided for connection to a seat cushion assembly. The armrest assembly comprises an armrest body, an armrest support supporting the armrest body and an armrest positioning means connected to the armrest support, the armrest positioning means for raising and lowering the armrest body between a down position and an up position and also for setting an inclination angle of the armrest, at least based on an inclination angle of a backrest frame. The armrest positioning means advantageously comprises a seat base connection interface for connection with the seat cushion assembly, a backrest connection interface for connection with a backrest frame and an armrest adjustment arrangement connected to each of the seat base connection interface, the backrest connection interface and the armrest support for raising and lowering the armrest body and changing an inclination angle thereof based on an inclination angle of at least the backrest frame and an actuator for actuating the movement between the down position and the up position.

The actuator may advantageously comprise a linearly moveable slider, slidably mounted on the connection interface. The armrest adjustment arrangement may advantageously comprise a scissor mechanism with a slide connection, in particular an upper pivot end guided in a guide slot of the armrest support, to the armrest support, a pivot connection to the armrest support, a pivot connection with the slider and a pivot connection with the backrest connection interface or with the backrest connection interface and the seat base connection interface.

The actuator may advantageously comprise a power drive comprising the linearly moveable slider supported to be moveable between a down position and an up position. A transmission and a motor drive may advantageously drive the linearly moveable slider, via the transmission between the down position and the up position.

The actuator may alternatively advantageously comprise a manually actuatable drive arrangement comprising the linearly moveable slider. An up biasing spring in this case biases the slider toward the up position.

A locking arrangement may advantageously be provided to lock the slider in a position. The locking arrangement may comprise a locking pin carried by the linearly moveable slider and a pin guide an locking plate connected to the seat base connection interface for locking the pin in the up position and guiding the pin to a down position.

The backrest connection interface may advantageously form a part of a four bar or more than four bar linkage.

According to another aspect of the invention, a vehicle seat is provided comprising a seat cushion assembly, a backrest comprising a backrest frame, a base backrest pivot connection between the seat base and the backrest pivotably connecting the seat base to the backrest and an armrest assembly as described above.

This invention provides an armrest configuration that maintains set comfort positions through an entire range of motion from a full up position through a design position to a complete recline position. This armrest deploys from the cushion either by manually lifting the armrest configuration or by powered movement using motors and switches.

The armrest is attached to the cushion frame at the required comfort and safety locations. With a configured linkage, electric motors, clutches, pistons (pneumatic, hydraulic) or linear motion system the following can be achieved: The linkage system that connects the back frame to the arm rest moves in unison with the slouch mechanism. This maintains a horizontal position or provides a desired position throughout an entire range of slouch motion, including providing changes in armrest position based on changes in the angle of the backrest. The armrest arrangement provides an armrest body ingress/egress state in which the armrest body is placed in a stored/full down position. This allows the occupant to also store the armrest if desired.

When the armrest is deployed from the stowed (ingress/egress) position to a designed comfort position, comfort use positions are provided based on the armrest angle being related to the backrest angle with a backrest to armrest angle relationship through a full range of recliner/slouch adjustment. The relationship may be based on a comfort analysis.

A constant spring force may be provided to maintain a constant force in the down position for easy use. A push/push locking configuration may be provided for manual locks the armrest in the up position.

The described configuration with the armrest automatic following a seat position aspect, particularly the backrest - slouch vehicle seats and also simple reclining vehicle seats - is a configures system that is attached to the cushion assembly. The following of the following a seat position may also include following the seat base (cushion position) with a slouch seat configuration. This preferred configuration employs a scissor mechanism with a four bar linkage to maintain a constant height and angle throughout an entire travel of the seat (in particular at least the backrest) from design to slouch/recline position.

The system can be powered or manual. The powered configuration can use a powered transmission with a worm gear configuration to activate the armrest to the up/deployed position. The manual configuration can work on a slide track system with a constant force spring.

When activated this combination brings the system to either a deployed/up position in use or a back to zero/ingress position when not in use. This configuration with manual lift activates the armrest to the up/deployed position. The system locks on a push/push locking pin in the up position. The design can work on a slide track system with a constant force spring. When activated this combination brings the system from the deployed/up position in use or a back to zero/ingress position when not in use.

The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which preferred embodiments of the invention are illustrated.

### Brief description of the figures and the preferred embodiments

The invention is explained in more detail below with reference to advantageous exemplary embodiments which are illustrated in the figures. However, the invention is not restricted to this exemplary embodiments. In the figures:
- Fig 1:: is a side view of a vehicle seat including a cushion assembly (seat base assembly) of a vehicle seat in a design position with an armrest in an ingress/egress (down) position and showing a backrest schematically and broken away;
- Fig. 2:: is a side view of the cushion assembly in the design position with the armrest in a use (up) position;
- Fig. 3.: is a side view showing armrest adjustment features of the vehicle seat of Fig. 1, showing the cushion assembly with the side trim removed, the cushion member removed and also a connected backrest frame with the armrest in the ingress/egress position;
- Fig. 4:: is a side view showing armrest adjustment features of the arrangement according to Fig. 3 with the armrest in the use position;
- Fig. 5:: is a side view of the vehicle seat showing the cushion assembly of Fig. 1 in a slouch position with the armrest in the ingress/egress position;
- Fig. 6:: is a side view of the cushion assembly in the slouch position with the armrest in the use position;
- Fig. 7:: is a side view showing armrest adjustment features of the vehicle seat of Fig. 1 with the cushion assembly of Fig. 6 shown with the side trim removed, the cushion member removed and also showing the connected backrest frame with the armrest in the ingress/egress position;
- Fig. 8:: is a side view of the features of Fig. 7 with the armrest in the use position;
- Fig. 9A:: is a perspective view of power drive features with the armrest in the down (ingress/egress) position;
- Fig. 9B:: ia a perspective view showing power drive features with the armrest in the up (use) position;
- Fig. 10:: is a perspective view showing an underside of the vehicle seat and showing features of the power drive;
- Fig. 11:: is a side view of the armrest position adjustment features according to another embodiment, shown with the cushion assembly in a design position and with the armrest in the egress position;
- Fig. 12:: is a side view of the armrest position adjustment features of the embodiment of Fig. 11, shown with the cushion assembly in the design position and with the armrest in the use position;
- Fig. 13:: is a side view of the armrest position adjustment features of the embodiment of Fig. 11, shown with the cushion assembly in the slouch position and with the armrest in the egress position;
- Fig. 14:: is a side view of the armrest position adjustment features of the embodiment of Fig. 11, shown with the cushion assembly in the slouch position and with the armrest in the use position;
- Fig. 15:: is a front end view of a manually actuatable arrangement for setting the position of the armrest according to the embodiment of Figure 11;
- Fig. 16:: is a perspective view showing the manually actuatable arrangement of Fig. 15;
- Fig. 17:: is a perspective view of the manually actuatable arrangement of Fig. 15;
- Fig. 18A:: is a side view of the manually actuatable arrangement of Fig. 15 shown in the down position;
- Fig. 18B:: is a side view of the manually actuatable arrangement of Fig. 15 shown in the up position;
- Fig. 19A:: is a top view of the manually actuatable arrangement of Fig. 15, shown with features removed and in the down position;
- Fig. 19B:: is a top view of the manually actuatable arrangement of Fig. 15, shown with features removed and in the up position;
- Fig. 20A:: is a top view of the pin guide and locking plate of the arrangement of Fig. 15, showing the locking pin in the down position;
- Fig. 20B:: is a top view of the pin guide and locking plate of the arrangement of Fig. 15, showing the locking pin in the up locked position; and
- Fig. 21:: is a perspective view showing portions of the vehicle seat with the armrest position adjustment features of the embodiment of Fig. 11.

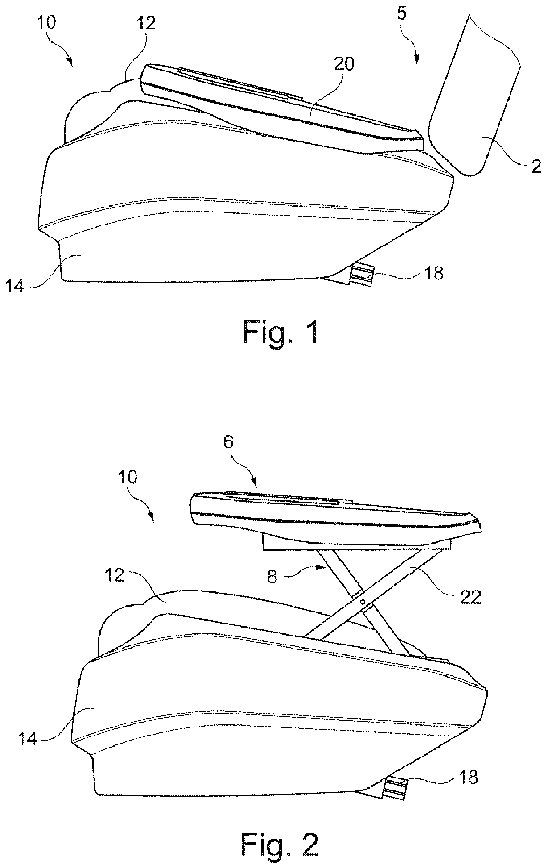

Referring to the drawings, in particular Figure 1 shows a seat cushion assembly (seat base assembly) generally designated 10, with a backrest 2 shown broken away and schematically, as a part of a vehicle seat generally designated 5. The seat cushion assembly 10 includes a cushion member 12 supported by a cushion frame 16 (discussed further below) and with side trim 14. The cushion assembly 10 of the vehicle seat 5 is mounted for movement along a longitudinal adjustment arrangement 18. The cushion assembly 10 includes an armrest assembly generally designated 6 with an armrest body 20. The armrest assembly 6 is a part of the cushion assembly 10 and is supported by the cushion frame 16.

In Figure 1, the cushion assembly 10 is shown in a design position, the normal or typical use position, and the armrest body 20 is shown in a down or ingress/egress position (egress position). In the egress position the armrest body 20 is positioned close to the side trim 14 and at about a level of the cushion member 12. As such, the armrest body 20 does not block a user from getting into or out of the vehicle seat 5. Figure 2 shows the cushion assembly 10 but with the armrest body 20 in an up or use position. In the use position, the armrest body 20 is positioned with an upper surface at a level and at an angle to support the arm of the user seated in the vehicle seat 5. The armrest assembly 6 includes an armrest positioning means generally designated 8. The armrest positioning means generally designated 8 is for raising and lowering the armrest body 20 between the down (egress) position and the up (use) position and also for setting an inclination angle of the armrest body 20 in each of the down position and the up position, at least based on an inclination angle of a backrest frame 24 of the backrest 2. The position and angle of the armrest body 20 may also be set based on an inclination angle of the cushion assembly 10 (in the case of a slouch seat with moveable cushion member 12/cushion assembly 10).

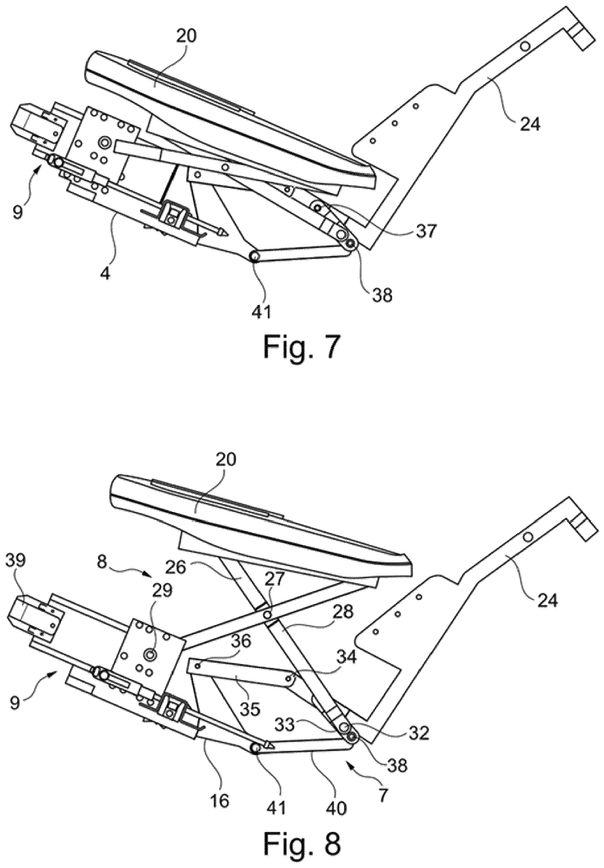

In the preferred embodiments the armrest positioning means 8 comprises inter alia an armrest adjustment arrangement 22 in the form of a scissor mechanism for raising and lowering the armrest body 20 and changing an inclination angle thereof based on an inclination angle of at least the backrest frame 24. The armrest adjustment arrangement 22 acts between a seat base connection interface 4 for connection with a seat cushion assembly 10, such as at the cushion frame 16, and an armrest support 21, to raise and lower and position the armrest body 20 (see e.g., Figures 7, 8, and 11 - 14). The armrest positioning means 8 also has a backrest connection interface 7 for connection with a backrest frame 24. In the preferred embodiments the armrest positioning means 8 further comprises an actuator, generally designated 9, for actuating the movement between the down (egress) position and the up (use) position. According to a first disclosed embodiment, the actuator 9 is a power drive generally designated 30. According to the second disclosed embodiment, the actuator 9 is a manually actuatable drive arrangement generally designated 70.

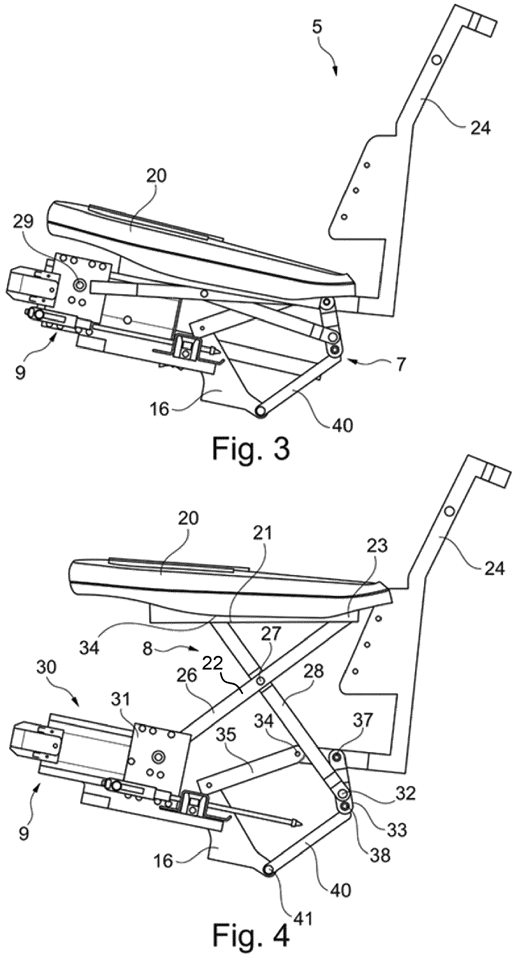

Figures 3 and 4 show an embodiment of the armrest positioning means 8 with the armrest adjustment arrangement 22 and also show features of the cushion assembly 10, with the cushion member 12 and the side trim 14 removed, and show the backrest frame 24 of the vehicle seat 5. The backrest frame 24 is connected to the cushion assembly 10 and is connected to the armrest adjustment arrangement 22 by the various links that form the backrest connection interface 7. Figure 3 shows the features with the cushion arrangement 10 and the backrest frame 24 in the design position and the armrest body 20 in the egress position (corresponding to Figure 1). In this design/egress position the scissor mechanism of the armrest adjustment arrangement 22 is collapsed.

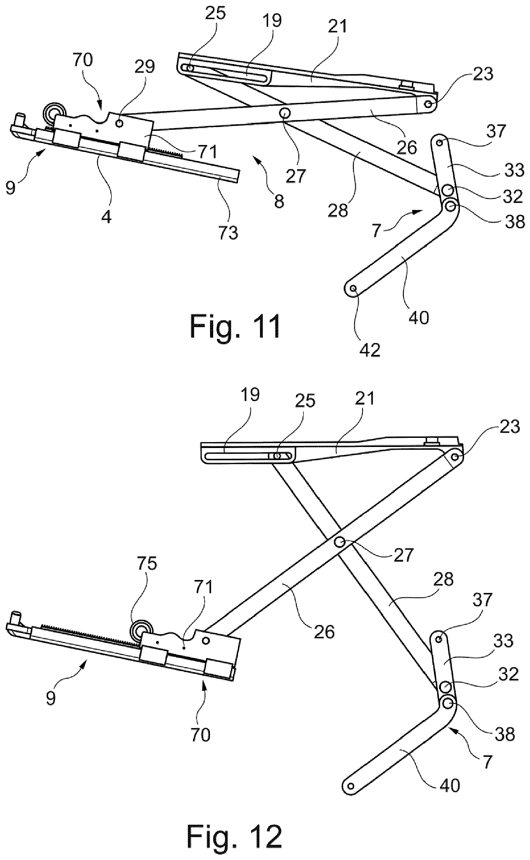

In Figure 4, with the armrest body 20 in the use position, the scissor mechanism of the armrest adjustment arrangement 22 has been acted on by the power drive 30. The scissor mechanism of the armrest adjustment arrangement 22 includes link arms 26 and 28 which are connected at a pivot joint 27. A pivot joint end 29 of the link arm 26 is pivotably connected to a slider member 31 of the power drive 30. A pivot joint end 32 of the link arm 28 is pivotably connected to a link arm 33 of a bar linkage arrangement of the backrest connection interface 7 discussed further below. An upper pivot end 23 of the link arm 26 is pivotably connected to the armrest support 21. An upper pivot end 25 of the link arm 28 slides in a guide slot 19 (best shown in Figures 11 - 14) of the armrest support 21. Essentially, moving the pivot joint end 29 toward the pivot joint end 32 causes the armrest body 20 to be raised and moving the pivot joint end 29 away from the pivot joint end 32 causes the armrest body 20 to be lowered. However, the armrest adjustment arrangement 22 further has connections via the backrest connection interface 7 to provide for a change in angle of the upper surface of the armrest body 20 depending upon the position of the backrest 24 and/or a position of the seat cushion arrangement 10.

The vehicle seat 5 is a slouch seat in which a change in angular position of the backrest frame 24 is associated with a change in angular position and/or longitudinal position of the seat cushion arrangement 10. With a configuration of the backrest connection interface 7 and the connection of the backrest connection interface 7 to the cushion assembly 10 and to the adjustment arrangement 22, the angular position of the armrest body 20 changes, particularly based on a change in the angular position of the backrest 24.

The kinematics of motion is established based on the pivot end 32 being connected to linkage members including the link arm 33. The backrest frame 24 has a pivot connection 34 connected by a link arm 35 to the seat base frame 16 at a pivot connection 36. Additionally, the backrest frame 24 is connected at pivot connection 37 to the link arm 33. The link arm 33 is in turn connected at pivot connection 38 to link arm 40 which is in turn pivotally connection to the seat cushion frame 16 at pivot connection 41. This connection of the backrest frame 24 to the link arm 35 and to the cushion frame 16 as well as the connection of the backrest frame 24 to the link arm 33 and the link arm 40 to the cushion frame 16 sets the kinematics of the relative movement of the backrest frame 24 and the seat cushion arrangement 10 as the backrest 2 and the seat cushion arrangement 10 move between the design position and a full slouch position. The connection of the scissor mechanism 22, with the pivot end 32 of link arm 28 at a location along a length of link arm 33, allows the angle of armrest body 20 to change along with the changes in angular position of the backrest frame 24 and the change in position of the seat cushion assembly 10. This allows the angle of the armrest body 20 to be coordinated with the angle of the backrest frame 24 and/or the angle of the seat cushion 12/seat cushion assembly 10. In this regard it is noted that the armrest adjustment arrangement 22 is not limited to a slouch seat arrangement and the scissor mechanism of the armrest adjustment arrangement 22 can also be connected by the backrest connection interface 7 to the backrest 24 such that the angle of the armrest body 20 only follows the pivoting motion of the backrest 2, thereby changing an angular position of the armrest body 20, only based on the angular position of the backrest frame 24.

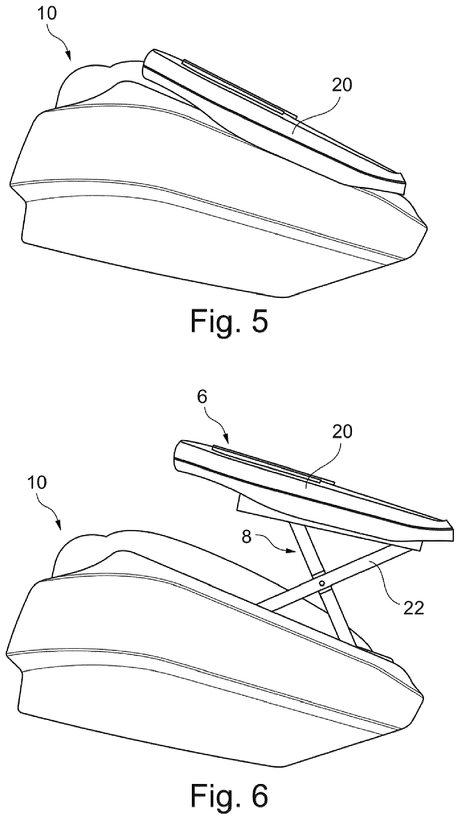

Figures 5 and 6 show the cushion arrangement 10 in the slouch position (moved from the design position). A comparison of Figures 1, 2, 5 and 6 shows that the angular position of the armrest body 20 changes with the various different positions of the cushion assembly 10.

Figures 7 and 8 show the features of the vehicle seat 5 that are shown in Figure 3, but shows both the features of the cushion arrangement 10 as well as the backrest frame 24 with a changed angle, in the slouch position. The various link arms 33, 35 40 also have an angular position which is changed relative to the position shown in Figures 3 and 4. Particularly, based on the change in angular position of link arm 33, the armrest adjustment arrangement 22 moves the armrest body 20 between the egress position shown in Figure 7 and the use position shown in Figure 8. The armrest body 20 is at a different angular position as compared to the angular positions shown in Figures 4 and 5. This is essentially due to the change in backrest angle/position and the change in seat cushion angle/position which results in the change in angular position of link arm 33. The connection of the scissor mechanism of the adjustment arrangement 22, via the backrest connection interface 7, to the backrest 24 results in different kinematics of motion of the armrest body 20 as the pivot end 29 is moved toward the pivot end 32. Additionally, the change in angular position of the armrest body 20 is due to a change in the travel path of the slider member 31 of the power drive 30.

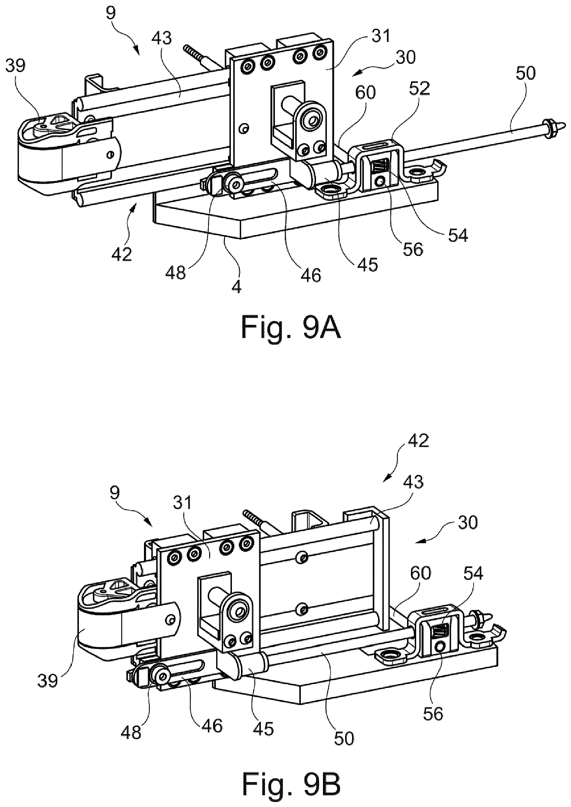

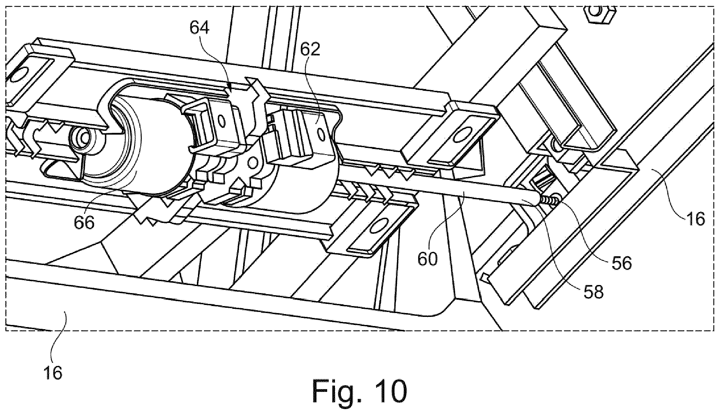

Figures 9A, 9B and 10 show an embodiment of the power drive 30. The power drive 30 includes a rail and slide assembly generally designated 42. The rail and slide assembly 42 includes a rail 43 on which the slider 31 moves between a full forward down (egress) position and a full rearward up (use) position. The movement of the slider 31 is brought about by movement of a coupling member 45 which includes a connection slot 46. The connection slot 46 receives a bolt 48 which is fastened to the slider 31. The slot 46 and the bolt 48 allow for an adjustable fixing of the slider 31 relative to the coupling member 45. The coupling member 45 is fixed to an end of a worm gear 50 such that the slider 31 moves between the two extreme positions based on an axial position of the worm gear 50.

The worm gear 50 is in turn driven in the axial direction based on a power transmission arrangement 52, including a worm drive gear 54. The worm drive 54 includes an inner threaded surface engaging the threads on the worm gear 50, to move the worm gear 50 axially upon rotation of the worm drive gear 54. The worm drive gear 54 includes exterior gearing to engage with a lead screw 56 that is part of a lead screw assembly 58 (Figure 10). The lead screw assembly 58 includes a driven shaft 60 which is driven by a motor, in particular by a horizontal motor 62. The horizontal motor 62 is part of a horizontal motor assembly 64.

Advantageously, the vehicle seat 5 may include an armrest assembly 6, with armrest body 20, at each side of the cushion assembly 10 with essentially the same armrest adjustment arrangement 22 and the same actuator 9 with the power drive 30 having another motor, in particular a horizontal motor 66. Depending upon the direction of rotation of the motor 62 and motor 66, the associated slider 31 moves to move the respective armrest body 20. The power drive 30 further includes a constant force return spring 39 comprising a coil spring connected to the rail 43 and to the slider 31. The force return spring 39 biases the slider 31 toward the down position.

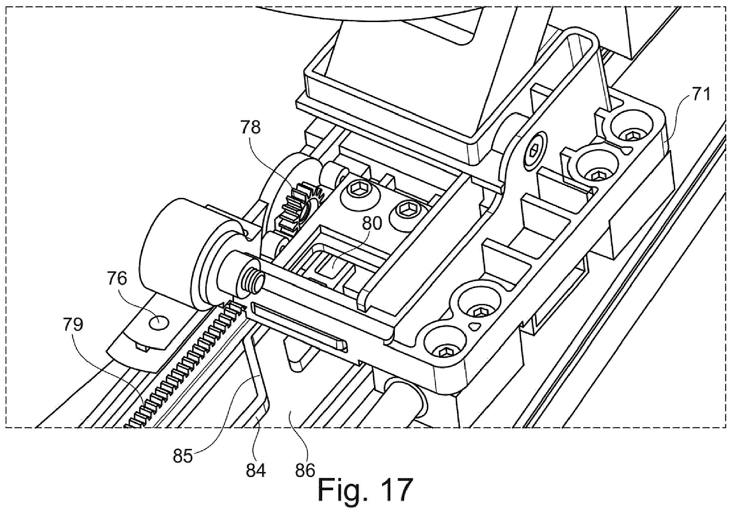

Figure 11 through 20 relate to the vehicle seat 5 and an armrest arrangement 10 with an actuator 9 in the form of a manually actuatable drive arrangement 70, that is manually actuatable, for moving the armrest body 20 via an adjustment arrangement 22. The armrest adjustment arrangement 22 includes the same features (indicated by identical reference numbers) as the armrest adjustment arrangement 22 discussed above, including the armrest support 21 that defines the slot 19 and that supports the armrest body 20, and the scissor mechanism including link arms 26 and 28 connected at pivot joint 27.

The link arm 28 includes the upper pivot end 25 that slides within the slot 19 between the two extreme positions and includes the pivot joint end 32 pivotably connected to the link arm 33. The link arm 26 includes the upper pivot end 23 and the pivot joint end 29 which is driven by the manually actuatable drive arrangement 70. In a manner which is essentially identical to the embodiment of Figures 1 through 10, the link arm 33 has an upper pivot connection 37 with the backrest frame 24 and has a pivot connection 38 connected to a link arm 40 which is in turn pivotably connected at pivot connection 41 to the cushion frame 16.

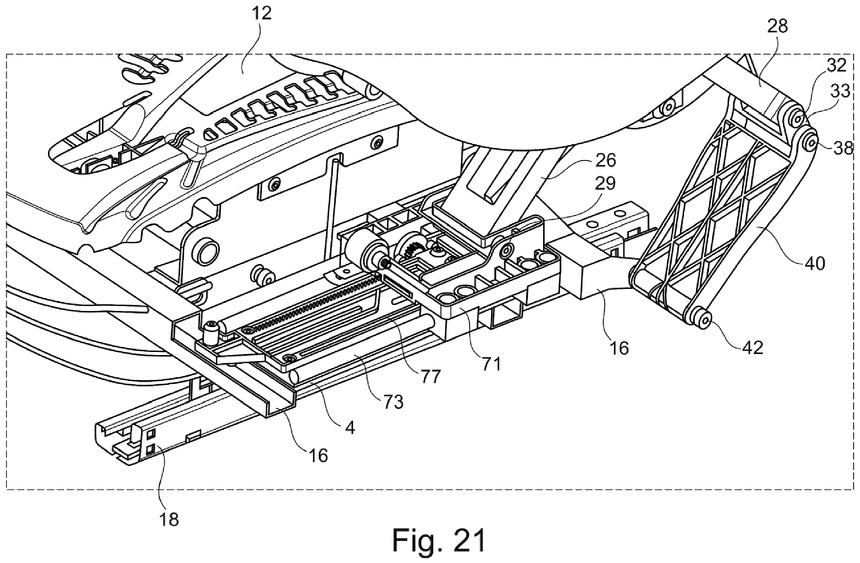

With the embodiment of Figures 11 through 21, which includes the manually actuatable drive arrangement 70, the kinematics as to the movement of the backrest frame 24 and the cushion assembly 10 are essentially the same as discussed above with regard to the embodiment of Figures 1 through 10. Further, according to the embodiment of Figures 11 through 21, the armrest adjustment arrangement 22 may only be responsive to changes in angle of the backrest 2, such as with a vehicle seat 5 in which only the backrest frame 24 pivots relative to the cushion assembly 10, and the cushion assembly 10 essentially does not pivot or move during the backrest angular adjustment.

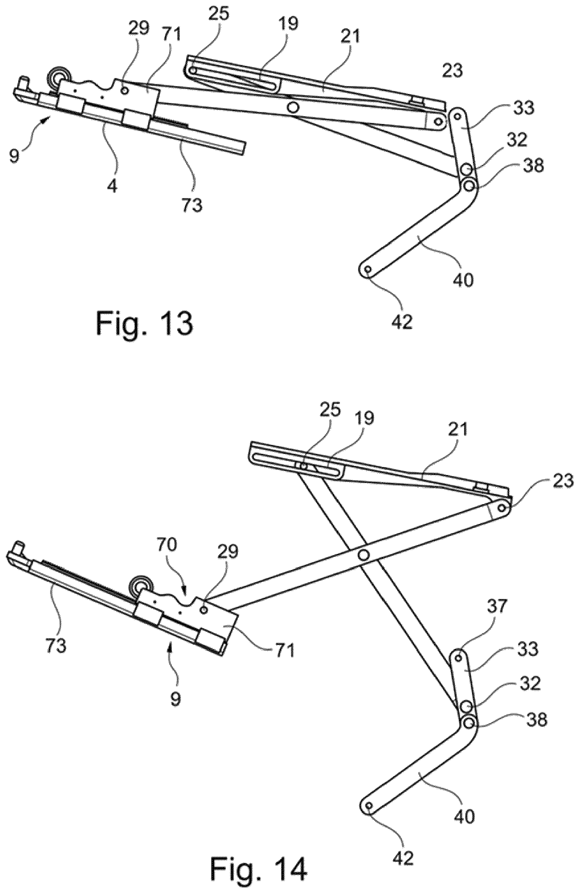

Figures 11 - 14 show the variation of the vehicle seat 5 with the armrest adjustment arrangement 22 interacting with the manually actuatable drive arrangement 70. Figures 13 and 14 show the links 33 and 40 with a changed angle of the backrest 24 and of the cushion frame 16. The various link arms 33, 40 also have an angular position in Figures 13 and 14 which is changed relative to the position shown in Figures 11 and 12. Particularly based on the change in angular position of link arm 33, the armrest adjustment arrangement 22 moves the armrest body 20 between the egress position shown in Figure 11 and the use position shown in Figure 12 such that the armrest body 20 is at a different angular position in each of the views of Figures 11 - 14. This is essentially due to the change in backrest angle and the change in seat cushion angle which results in the change in angular position of link arm 33. The connection of the scissor mechanism of the armrest adjustment arrangement 22, via the backrest connection interface 7, to the backrest 24 results in the kinematics of motion as the pivot joint end 29 is moved toward the pivot joint end 32. Additionally, the change in angular position of the armrest body 20 is due to a change in the travel path of a slider member/slider assembly 71 of the manually actuatable drive 70.

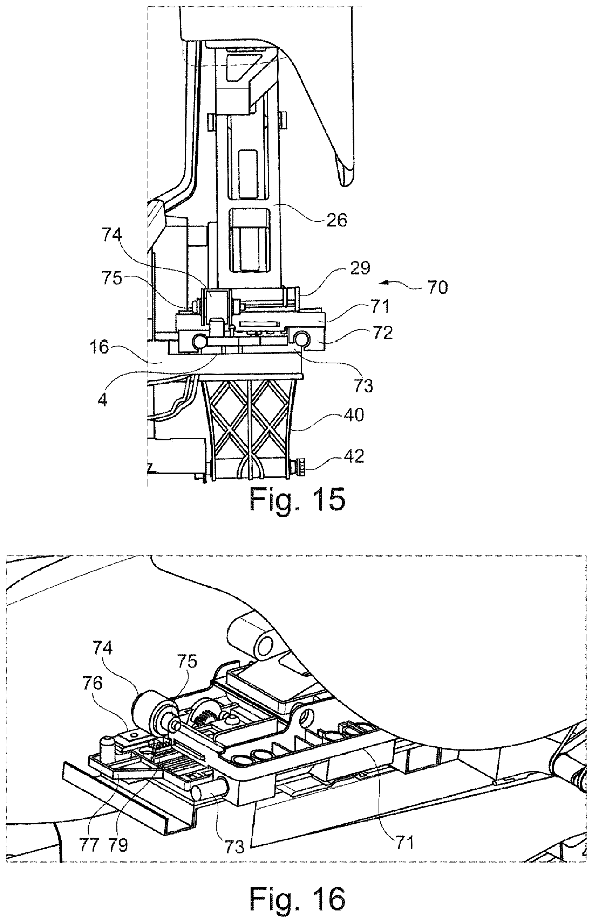

Figure 15 shows the manually actuatable drive arrangement (drive) 70 viewed from the front of the vehicle seat 5. The drive 70 includes the slider assembly 71 which moves along a rail 73. The rail 73 is fixed to the cushion frame 16 at the seat base connection interface 4. The slider assembly 71 may be a single part but is shown based on a preferred embodiment as a multi component structure including slider members 72. The slider assembly 71 is connected to the link arm 26 at pivot joint end 29. The slider assembly 71 moves between the two extreme positions as can be appreciated by comparing Figures 11 and 12, Figures 13 and 14, Figures 18A and 18B and Figure 19A and 19B.

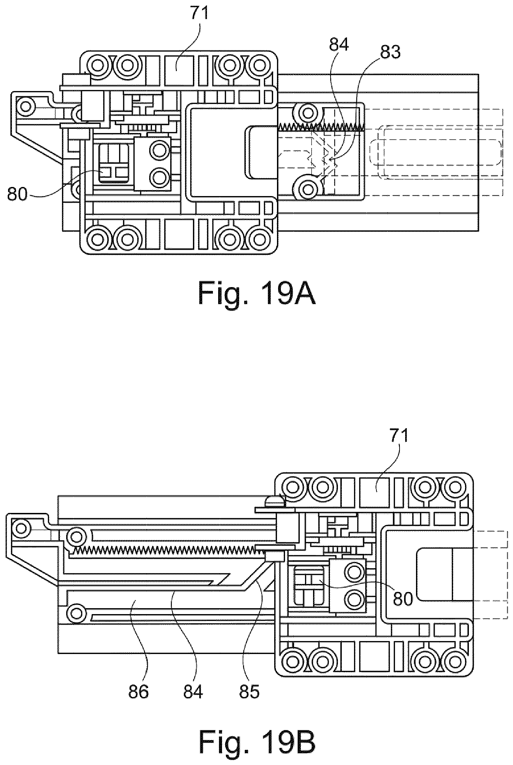

The slider assembly 71 carries a constant force return spring 74. Return spring 74 is a coil spring mounted on a coil spring support 75 of the slider assembly 71. The coil spring 74 has a fixed end 76 that is fixed to a pin guide and locking plate 77. The slider assembly 71 carries a dampener 78 which interacts with a toothed rack 79 of the locking plate 77. The dampener 78 and toothed rack 79 configuration regulates the speed of motion of the slider assembly 71 along the rail 73 by dampening the action/force provided by the coil spring 74. The slider assembly 71 also carries a push lock and release member 80 (lock member 80) which can be moved laterally between two extreme positions shown in Figure 19A and 19B.

The locking member 80 includes a locking pin 82 which interacts with guide and locking surfaces that form a pin slot 86 of the locking plate 77. The surfaces that interact with the pin 82 include a locking notch 83 with an adjacent unlocking incline 84 as well as a return guide surface 85 and a return guide surface 87. The lock and release member 80, that carries the locking pin 82 is biased toward the upper position (Figure 19B) and away from the position shown in Figure 19A.

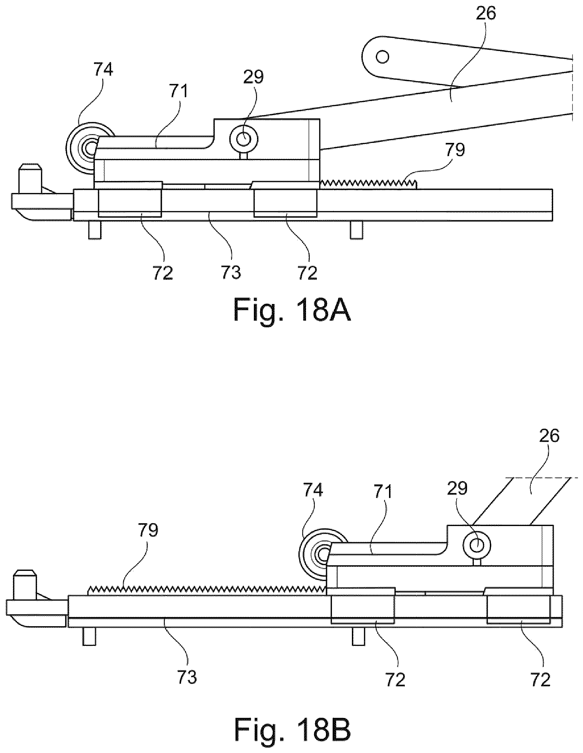

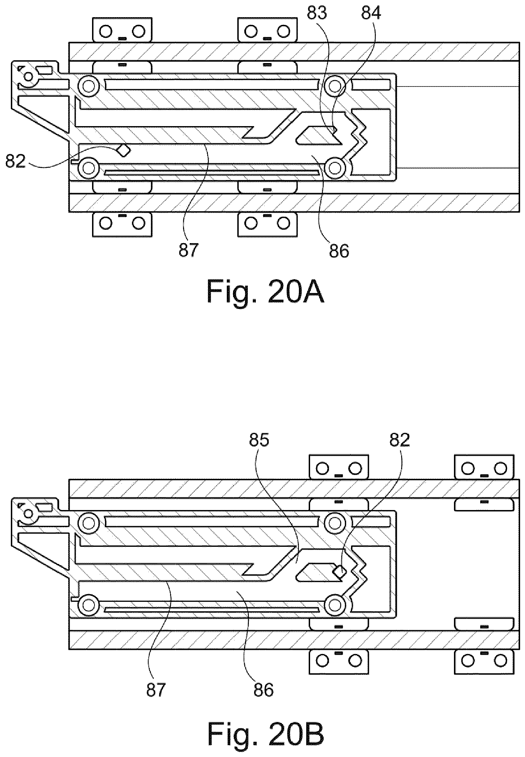

In operation, the coil spring 74 biases the armrest assembly 6 such that the armrest support 21 (carrying the armrest body 20) is in the down (egress) position. Features of the drive 70 in the down position are shown in Figures 18A, 19A and 20A. In the down position the lock and release member 80 is held in the position shown in Figure 19A based on the locking pin 82 engaging the return guide surface 87. To change the armrest assembly 6 from the down (egress) position to the up (use) position, the user lifts the armrest body 20, which lifts the armrest support 21 and causes the slider assembly 71 to move rearwardly (toward the right in Figure 19A) against the action of the coil spring 74. As such, the locking pin 82 moves along the pin slot 86 until the armrest body 20 is in the use position. As the armrest body 20 reaches the up (use) position, the pin 82 moves into the locking notch 83 (Figure 20B). This locks the manually actuatable drive 70 in the use position. To change the armrest assembly 6 from the up (use) position to the down (egress) position, the user lifts the armrest body 20 such that the pin 82 travels along the unlocking incline 84 to clear the locking notch 83. The pin 82 then moves toward return guide surface 85 and then the return guide surface 87 as the slider assembly 71 moves forward (toward the left in Figure 19B), under the action of the coil spring 74.

While specific embodiments of the invention have been shown and described in detail to illustrate the application of the principles of the invention, it will be understood that the invention may be embodied otherwise without departing from such principles, as long it belongs to the scope as defined by the appended claims.

### List of reference numbers

- 2: backrest
- 4: seat base connection interface
- 5: vehicle seat
- 6: armrest assembly
- 7: backrest connection interface
- 8: armrest positioning means
- 9: actuator
- 10: cushion assembly
- 12: cushion member
- 14: side trim
- 16: cushion frame
- 18: longitudinal adjustment arrangement
- 19: guide slot
- 20: armrest body
- 21: armrest support
- 22: armrest adjustment arrangement
- 23: upper pivot end, pivot connection
- 24: backrest frame
- 25: upper pivot end
- 26: link arm
- 27: pivot joint
- 28: link arm
- 29: pivot joint end, pivot connection
- 30: power drive
- 31: slider member
- 32: pivot joint end, pivot connection
- 33: link arm
- 34: pivot connection
- 35: link arm
- 36: pivot connection
- 37: pivot connection
- 38: pivot connection
- 39: constant force return spring
- 40: link arm
- 41: pivot connection
- 42: rail and slide assembly
- 43: rail
- 45: coupling member
- 46: connection slot
- 48: bolt
- 50: worm gear
- 52: power transmission arrangement
- 54: worm drive gear
- 56: lead screw
- 58: lead screw assembly
- 60: driven shaft
- 62: horizontal motor
- 64: horizontal motor assembly
- 66: second armrest horizontal motor
- 70: manually actuatable drive arrangement
- 71: slider assembly
- 72: slider member
- 73: rail
- 74: return spring
- 75: coil spring support
- 76: coil spring fixed end
- 77: locking/pin guide plate
- 78: dampener
- 79: toothed rack
- 80: lock and release member (lock member)
- 82: locking pin
- 83: locking notch
- 84: unlocking incline
- 85: return guide
- 86: pin slot
- 87: return guide

## Claims

1. Armrest assembly (6) for connection to a seat cushion assembly (10), the armrest assembly (6) comprising:
an armrest body (20);
an armrest support (21) supporting the armrest body (20);
an armrest positioning means (8) connected to the armrest support (21), the armrest positioning means (8) for raising and lowering the armrest body (20) between a down position and an up position and also for setting an inclination angle of the armrest body (20), at least based on an inclination angle of a backrest frame (24), the armrest positioning means (8) comprising:
a seat base connection interface (4) for connection with the seat cushion assembly (10);
a backrest connection interface (7) for connection with a backrest frame (24);
an armrest adjustment arrangement (22) connected to each of the seat base connection interface (4), the backrest connection interface (7) and the armrest support (21) for raising and lowering the armrest body (20) and changing an inclination angle thereof based on an inclination angle of at least the backrest frame (24); and
an actuator (9) for actuating the movement between the down position and the up position.

2. Armrest assembly (6) according to claim 1, wherein the actuator (9) comprises a linearly moveable slider member (31), slidably mounted on the seat base connection interface (4); the armrest adjustment arrangement (22) comprises a scissor mechanism with a slide connection (25, 19) to the armrest support (21), a pivot connection (23) to the armrest support (21), a pivot connection (29) with the slider member (31) and a pivot connection (32) with the backrest connection interface (7) or with the backrest connection interface (7) and the seat base connection interface (4).

3. Armrest assembly (6) according to claim 2, wherein the actuator (9) comprises a power drive (30) comprising the linearly moveable slider member (31) supported to be moveable between a down position and an up position; and a power transmission arrangement (52) and a motor drive, driving the linearly moveable slider member (31), via the power transmission arrangement (52) between the down position and the up position.

4. Armrest assembly (6) according to claim 2, wherein the actuator (9) comprises a manually actuatable drive arrangement (70) comprising the linearly moveable slider; a biasing spring biasing the slider toward the up or the down position; a lock member (80) to lock the slider in a position.

5. Armrest assembly (6) according to claim 4, wherein the lock member (80) comprises a locking pin (82) carried by the linearly moveable slider; and a pin guide and locking plate (77) connected to the seat base connection interface (4) for locking the locking pin (82) in the up position and guiding the locking pin (82) to a down position.

6. Armrest assembly (6) according to claim 2, wherein the backrest connection interface (7) forms a part of a four bar or more than four bar linkage.

7. Vehicle seat (5) comprising:
a seat cushion assembly (10);
a backrest (2) comprising a backrest frame (24);
a base backrest pivot connection between the seat base and the backrest (2) pivotably connecting the seat base to the backrest (2); and
an armrest assembly (6) according to one of the claims 1 to 6 and connected to the seat cushion assembly (10).

8. Vehicle seat (5) according to claim 7, wherein the actuator (9) comprises a linearly moveable slider member (31), slidably mounted on the connection interface (4); the armrest adjustment arrangement (22) comprises a scissor mechanism with a slide connection (25, 19) to the armrest support (21), a pivot connection (23) to the armrest support (21), a pivot connection (29) with the slider member (31) and a pivot connection (32) with the backrest connection interface (7) or with the backrest connection interface (7) and the seat base connection interface (4).

9. Vehicle seat (5) according to claim 8, wherein the actuator (9) comprises a power drive (30) comprising the linearly moveable slider member (31) supported to be moveable between a down position and an up position; and a power transmission arrangement (52) and a motor drive, driving the linearly moveable slider member (31), via the power transmission arrangement (52) between the down position and the up position.

10. Vehicle seat (5) according to claim 8, wherein the actuator (9) comprises manually actuatable drive arrangement (70) comprising the linearly moveable slider; a biasing spring biasing the slider toward the up or down position; and a lock member (80) to lock the slider in a position.

11. Vehicle seat (5) according to claim 10, wherein the lock member 880) comprises a locking pin (82) carried by the linearly moveable slider; and a pin guide an locking plate (77) connected to the seat base connection interface (4) for locking the locking pin (82) in the up position and guiding the locking pin (82) to a down position.

12. Vehicle seat (5) according to claim 8, wherein the backrest connection interface (7) forms a part of a four bar or more than four bar linkage.

## Patentansprüche

1. Armlehnenanordnung (6) zur Verbindung mit einer Sitzpolsteranordnung (10), wobei die Armlehnenanordnung (6) Folgendes umfasst:
einen Armlehnenkörper (20),
eine Armlehnenstütze (21), die den Armlehnenkörper (20) stützt,
ein Armlehnenpositionierungsmittel (8), das mit der Armlehnenstütze (21) verbunden ist, wobei das Armlehnenpositionierungsmittel (8) zum Anheben und Absenken des Armlehnenkörpers (20) zwischen einer abgesenkten Position und einer angehobenen Position sowie zum Einstellen eines Neigungswinkels des Armlehnenkörpers (20) mindestens auf der Grundlage eines Neigungswinkels eines Rückenlehnenrahmens (24) dient, wobei das Armlehnenpositionierungsmittel (8) Folgendes umfasst:
eine Sitzbasisverbindungsschnittstelle (4) zur Verbindung mit der Sitzpolsteranordnung (10),
Rückenlehnenverbindungsschnittstelle (7) zur Verbindung mit einem Rückenlehnenrahmen (24),
eine Armlehnenverstellanordnung (22), die jeweils mit der Sitzbasisverbindungsschnittstelle (4), der Rückenlehnenverbindungsschnittstelle (7) und der Armlehnenstütze (21) verbunden ist, um den Armlehnenkörper (20) anzuheben und abzusenken und auf der Grundlage eines Neigungswinkels mindestens des Rückenlehnenrahmens (24) einen Neigungswinkel davon zu ändern, und
einen Aktuator (9) zur Betätigung der Bewegung zwischen der abgesenkten Position und der angehobenen Position.

2. Armlehnenanordnung (6) nach Anspruch 1, wobei der Aktuator (9) ein linear bewegliches Schieberglied (31) umfasst, das verschiebbar an der Sitzbasisverbindungsschnittstelle (4) montiert ist, und die Armlehnenverstellanordnung (22) einen Scherenmechanismus mit einer Schiebeverbindung (25, 19) zu der Armlehnenstütze (21), einer Schwenkverbindung (23) zu der Armlehnenstütze (21), einer Schwenkverbindung (29) mit dem Schieberglied (31) und einer Schwenkverbindung (32) mit der Rückenlehnenverbindungsschnittstelle (7) oder mit der Rückenlehnenverbindungsschnittstelle (7) und der Sitzbasisverbindungsschnittstelle (4) umfasst.

3. Armlehnenanordnung (6) nach Anspruch 2, wobei der Aktuator (9) einen Fahrantrieb (30), der das linear bewegliche Schieberglied (31) umfasst, das zur Bewegung zwischen einer abgesenkten Position und einer angehobenen Position gestützt ist, sowie eine Kraftübertragungsanordnung (52) und einen Motorantrieb umfasst, der das linear bewegliche Schieberglied (31) über die Kraftübertragungsanordnung (52) zwischen der abgesenkten Position und der angehobenen Position antreibt.

4. Armlehnenanordnung (6) nach Anspruch 2, wobei der Aktuator (9) eine manuell betätigbare Antriebsanordnung (70), die den linear beweglichen Schieber umfasst, eine Vorspannfeder, die den Schieber zu der angehobenen oder der abgesenkten Position vorspannt, und ein Arretierungsglied (80), um den Schieber in einer Position zu arretieren, umfasst.

5. Armlehnenanordnung (6) nach Anspruch 4, wobei das Arretierungsglied (80) einen von dem linear beweglichen Schieber getragenen Arretierungsstift (82) und eine Stiftführungs- und -arretierungsplatte (77) umfasst, die mit der Sitzbasisverbindungsschnittstelle (4) verbunden ist, um den Arretierungsstift (82) in der angehobenen Position zu arretieren und den Arretierungsstift (82) in eine abgesenkte Position zu führen.

6. Armlehnenanordnung (6) nach Anspruch 2, wobei die Rückenlehnenverbindungsschnittstelle (7) Teil eines vier- oder mehrgliedrigen Gelenkgetriebes bildet.

7. Fahrzeugsitz (5), umfassend:
eine Sitzpolsteranordnung (10),
eine Rückenlehne (2), die einen Rückenlehnenrahmen (24) umfasst,
eine Basis-Rückenlehne-Schwenkverbindung zwischen der Sitzbasis und der Rückenlehne (2), die die Sitzbasis schwenkbar mit der Rückenlehne (2) verbindet, und
eine Armlehnenanordnung (6) nach einem der Ansprüche 1 bis 6, die mit der Sitzpolsteranordnung (10) verbunden ist.

8. Fahrzeugsitz (5) nach Anspruch 7, wobei der Aktuator (9) ein verschiebbar an der Verbindungsschnittstelle (4) montiertes linear bewegliches Schieberglied (31) umfasst, die Armlehnenverstellanordnung (22) einen Scherenmechanismus mit einer Schiebeverbindung (25, 19) zu der Armlehnenstütze (21), eine Schwenkverbindung (23) zu der Armlehnenstütze (21), eine Schwenkverbindung (29) mit dem Schieberglied (31) und eine Schwenkverbindung (32) mit der Rückenlehnenverbindungsschnittstelle (7) oder mit der Rückenlehnenverbindungsschnittstelle (7) und der Sitzbasisverbindungsschnittstelle (4) umfasst.

9. Fahrzeugsitz (5) nach Anspruch 8, wobei der Aktuator (9) einen Fahrantrieb (30), der das linear bewegliche Schieberglied (31) umfasst, das zur Bewegung zwischen einer abgesenkten Position und einer angehobenen Position gestützt ist, sowie eine Kraftübertragungsanordnung (52) und einen Motorantrieb umfasst, der das linear bewegliche Schieberglied (31) über die Kraftübertragungsanordnung (52) zwischen der abgesenkten und der angehobenen Position antreibt.

10. Fahrzeugsitz (5) nach Anspruch 8, wobei der Aktuator (9) eine manuell betätigbare Antriebsanordnung (70), die den linear beweglichen Schieber umfasst, eine Vorspannfeder, die den Schieber zu der angehobenen oder der abgesenkten Position vorspannt, und ein Arretierungsglied (80), um den Schieber in einer Position zu arretieren, umfasst.

11. Fahrzeugsitz (5) nach Anspruch 10, wobei das Arretierungsglied 880) einen von dem linear beweglichen Schieber getragenen Arretierungsstift (82) und eine Stiftführungs- und -arretierungsplatte (77) umfasst, die mit der Sitzbasisverbindungsschnittstelle (4) verbunden ist, um den Arretierungsstift (82) in der angehobenen Position zu arretieren und den Arretierungsstift (82) in eine abgesenkte Position zu führen.

12. Fahrzeugsitz (5) nach Anspruch 8, wobei die Rückenlehnenverbindungsschnittstelle (7) Teil eines vier- oder mehrgliedrigen Gelenkgetriebes bildet.

## Revendications

1. Ensemble accoudoir (6) destiné à être relié à un ensemble coussin de siège (10), l'ensemble accoudoir (6) comprenant :
un corps d'accoudoir (20) ;
un support d'accoudoir (21) supportant le corps d'accoudoir (20) ;
un moyen de positionnement d'accoudoir (8) relié au support d'accoudoir (21), le moyen de positionnement d'accoudoir (8) permettant de lever et d'abaisser le corps d'accoudoir (20) entre une position basse et une position haute et permettant également de régler un angle d'inclinaison du corps d'accoudoir (20), au moins en fonction d'un angle d'inclinaison d'un cadre de dossier (24), le moyen de positionnement d'accoudoir (8) comprenant :
une interface de liaison de base de siège (4) pour la liaison avec l'ensemble coussin de siège (10) ;
une interface de liaison de dossier (7) pour la liaison avec un cadre de dossier (24) ;
un agencement de réglage d'accoudoir (22) relié à chacun de l'interface de liaison de base de siège (4), de l'interface de liaison de dossier (7) et du support d'accoudoir (21) pour lever et abaisser le corps d'accoudoir (20) et changer son angle d'inclinaison en fonction de l'angle d'inclinaison d'au moins le cadre de dossier (24) ; et
un actionneur (9) pour actionner le mouvement entre la position basse et la position haute.

2. Ensemble accoudoir (6) selon la revendication 1, l'actionneur (9) comprenant un élément coulissant à déplacement linéaire (31), monté de manière coulissante sur l'interface de liaison de base de siège (4) ; l'agencement de réglage d'accoudoir (22) comprenant un mécanisme à ciseaux avec une liaison coulissante (25, 19) au support d'accoudoir (21), une liaison pivotante (23) au support d'accoudoir (21), une liaison pivotante (29) avec l'élément coulissant (31) et une liaison pivotante (32) avec l'interface de liaison de dossier (7) ou avec l'interface de liaison de dossier (7) et l'interface de liaison de base de siège (4).

3. Ensemble accoudoir (6) selon la revendication 2, l'actionneur (9) comprenant un entraînement motorisé (30) comprenant l'élément coulissant à déplacement linéaire (31) supporté pour être mobile entre une position basse et une position haute ; et un agencement de transmission de puissance (52) et un entraînement motorisé, entraînant l'élément coulissant à déplacement linéaire (31), par l'intermédiaire de l'agencement de transmission de puissance (52) entre la position basse et la position haute.

4. Ensemble accoudoir (6) selon la revendication 2, l'actionneur (9) comprenant un agencement d'entraînement actionnable manuellement (70) comprenant le coulisseau mobile linéairement ; un ressort de sollicitation sollicitant le coulisseau vers la position haute ou basse ; un élément de verrouillage (80) pour verrouiller le coulisseau dans une position.

5. Ensemble accoudoir (6) selon la revendication 4, l'élément de verrouillage (80) comprenant une goupille de verrouillage (82) portée par le coulisseau mobile linéairement ; et un guide de goupille et une plaque de verrouillage (77) reliés à l'interface de liaison de base de siège (4) pour verrouiller la goupille de verrouillage (82) en position haute et guider la goupille de verrouillage (82) vers une position basse.

6. Ensemble accoudoir (6) selon la revendication 2, l'interface de liaison de dossier (7) faisant partie d'une liaison à quatre barres ou à plus de quatre barres.

7. Siège de véhicule (5) comprenant :
un ensemble coussin de siège (10) ;
un dossier (2) comprenant un cadre de dossier (24) ;
une liaison pivotante base-dossier entre la base de siège et le dossier (2) reliant de manière pivotante la base de siège au dossier (2) ; et
un ensemble accoudoir (6) selon l'une des revendications 1 à 6 et relié à l'ensemble coussin de siège (10).

8. Siège de véhicule (5) selon la revendication 7, l'actionneur (9) comprenant un élément coulissant à déplacement linéaire (31), monté de manière coulissante sur l'interface de liaison (4) ; l'agencement de réglage d'accoudoir (22) comprenant un mécanisme à ciseaux avec une liaison coulissante (25, 19) au support d'accoudoir (21), une liaison pivotante (23) au support d'accoudoir (21), une liaison pivotante (29) avec l'élément coulissant (31) et une liaison pivotante (32) avec l'interface de liaison de dossier (7) ou avec l'interface de liaison de dossier (7) et l'interface de liaison de base de siège (4).

9. Siège de véhicule (5) selon la revendication 8, l'actionneur (9) comprenant un entraînement motorisé (30) comprenant l'élément coulissant à déplacement linéaire (31) supporté pour être mobile entre une position basse et une position haute ; et un agencement de transmission de puissance (52) et un entraînement motorisé, entraînant l'élément coulissant à déplacement linéaire (31), par l'intermédiaire de l'agencement de transmission de puissance (52) entre la position basse et la position haute.

10. Siège de véhicule (5) selon la revendication 8, l'actionneur (9) comprenant un agencement d'entraînement actionnable manuellement (70) comprenant le coulisseau mobile linéairement ; un ressort de sollicitation sollicitant le coulisseau vers la position haute ou basse ; et un élément de verrouillage (80) pour verrouiller le coulisseau dans une position.

11. Siège de véhicule (5) selon la revendication 4, l'élément de verrouillage 880) comprenant une goupille de verrouillage (82) portée par le coulisseau mobile linéairement ; et un guide de goupille et une plaque de verrouillage (77) reliés à l'interface de liaison de base de siège (4) pour verrouiller la goupille de verrouillage (82) en position haute et guider la goupille de verrouillage (82) vers une position basse.

12. Siège de véhicule (5) selon la revendication 8, l'interface de liaison de dossier (7) faisant partie d'une liaison à quatre barres ou à plus de quatre barres.
